# EUROPEAN PATENT APPLICATION

(11) **EP 4 756 334 A1**
(43) Date of publication of application: **10.06.2026**
(21) Application number: 24852168.4
(22) Date of filing: 30.07.2024
(51) Int. Cl.: F25D 23/06, F16L 59/02, F16L 59/065, F16L 59/08

(54) **HEAT INSULATOR**

(30) Priority: 04.08.2023 KR 20230102476
(71) Applicant: LG Electronics Inc., Yeongdeungpo-gu Seoul 07336 (KR)
(72) Inventor: JUNG, Wonyeong, Seoul 08592 (KR); YOUN, Deokhyun, Seoul 08592 (KR); LEE, Sungsub, Seoul 08592 (KR)
(74) Representative: Ter Meer Steinmeister & Partner
(86) International application number: PCT/KR2024/011109
(87) International publication number: WO 2025/033812

(57) **Abstract**

The present invention relates to a heat insulator formed of a first plate and a second plate that are disposed spaced apart from each other and have step gradients formed in directions gradually approaching each other through a plurality of steps, the heat insulator comprising: a central part in which the first plate and the second plate are spaced a predetermined first distance from each other; a side part which extends from the central part and in which the first plate and the second plate are spaced a second distance shorter than the first distance from each other; an corner part which extends from the side part and in which the first plate and the second plate are joined as a single plate; and a support part supporting the first plate and the second plate to maintain the first distance and the second distance in the central part and the side part, respectively.

## Description

### [Technical Field]

The present invention relates to a heat insulator. The present invention relates to a refrigerator having a heat insulator.

### [Background Art]

In refrigerators and the like, a heat insulator is used to prevent a temperature inside the refrigerator from rising due to a temperature difference between an outside and an inside of the refrigerator. In this case, as the heat insulator, a vacuum heat insulator applied with a vacuum heat insulation technique using a thermal insulation method that utilizes a phenomenon of lowering a thermal conductivity of low-pressure gas is widely used. Such a vacuum insulator may generally include a first plate and a second plate forming a certain space, and may be formed by discharging gas (e.g., air) from a space between the first plate and the second plate and/or sealing the space.

The heat insulator has a panel form, and a device such as the refrigerator has a configuration in which a plurality of heat insulators are coupled through assembly. Accordingly, each side surface of the heat insulator is coupled to the other heat insulator The coupling to the other heat insulator may be achieved through welding between plates that constitute the heat insulator.

However, in order to prevent a sealed vacuum space from being damaged due to welding when the heat insulator is welded, the heat insulator has an corner part protruding from a central part forming the sealed vacuum space. In order to support the corner part, a side surface portion which has a smaller thickness than the central part, but has the sealed vacuum space formed therein between the central part and the corner part. The corner parts are welded through such a structure, and as a result, a plurality of heat insulators may be coupled, and a structure such as the refrigerator, etc., may be formed without damage to the sealed vacuum space through bending of the welded portion.

However, the central part of the heat insulator has a thermal insulation effect due to the vacuum space, but the corner part does not have the vacuum space. Accordingly, the thermal insulation effect is not achieved. In this case, there is a problem in that cold air loss may occur within the device such as the refrigerator, etc., due to heat exchange between the corner part and external air.

Meanwhile, as described above, in the heat insulator, when a sealed space between the first and second plates becomes in a vacuum state, there is a disadvantage in that the heat insulator is vulnerable to an influence of atmospheric pressure or external forces. Accordingly, a design has emerged in which a support unit with support pins in for supporting the space between the first plate and the second plate forming the sealed vacuum space is disposed inside the sealed space in a sliding manner. However, the heat insulator according to such a design has a problem in that the atmospheric pressure or external force concentrates on the support pin or each point of the first or second plate in which the support pin is disposed, and as a result, the support pin or one point of each plate in which the support pin is disposed becomes vulnerable.

In addition, in the case of the heat insulator having the side part as described above, there is a problem that it is very difficult to dispose the support unit on the side part by disposing the support unit in the sliding manner. There is a problem in that the structure of the heat insulator is easily damaged when a side load is applied if the support unit is not disposed in the side part.

### [Disclosure]

### [Technical Problem]

An object of the present invention is to solve the above-described problem and other problems, and an object of the present invention is to provide a heat insulator having a support part capable of further improving a structural strength by efficiently distributing an applied load.

An object of the present invention is to provide a heat insulator having a support part which distributes a side load applied to a central part of the heat insulator and a side part formed between the central part and an corner part and to further improve a structural strength of the side part.

Another object of the present invention is to provide a coupling structure of the heat insulator further including a frame capable of preventing cold air loss due to exposure, to air, of an corner part of the heat insulator where no vacuum space is formed.

### [Technical Solution]

A heat insulator of the present invention may be provided as at least one heat insulator. As an example, the heat insulator of the present invention may provide a first wall extending in one direction; and a second wall extending in a direction different from the one direction. As another example, the heat insulator of the present invention may include a first heat insulator and a second heat insulator. The second heat insulator may be provided as a separate component separated from the first heat insulator. The second heat insulator may be connected to the first heat insulator by a connector. In the present invention, the connector may be defined as a joint. The second heat insulator may include a portion extending in the same direction as the first heat insulator. The second heat insulator may include a portion extending in a different direction from the first heat insulator. The insulator may be provided in the form of a panel.

A refrigerator of the present invention may include a main body. The refrigerator of the present invention may include a door.

The refrigerator of the present invention may include the heat insulator.

In order to achieve the object or other objects, according to an aspect of the present invention, a heat insulator according to an embodiment of the present invention may be provided with step gradients formed in directions gradually approaching each other through a plurality of steps. The heat insulator may be formed by a first plate and a second plate disposed spaced apart from each other. The heat insulator may include a central part in which the first plate and the second plate are spaced apart from each other by a set first distance. The heat insulator may include a side part extending from the central part, in which the first plate and the second plate are spaced apart from each other by a second distance. The second distance may be shorter than the first distance. The heat insulator may include an corner part extending from the side part, in which the first plate and the second plate are joined as a single plate. The heat insulator includes a support part supporting the first plate and the second plate to maintain the first distance and/or the second distance in the central part and/or the side part.

In order to achieve the object or other objects, according to an aspect of the present invention, a heat insulator according to an embodiment of the present invention may be formed by a first plate and a second plate having step gradients formed in directions gradually approaching each other through a plurality of steps and disposed spaced apart from each other. The heat insulator may include a central part in which the first plate and the second plate are spaced apart from each other by the set first distance. The heat insulator may include a side part extending from the central part, in which the first plate and the second plate are spaced apart from each other by a second distance shorter than the first distance. The heat insulator may include an corner part extending from the side part, in which the first plate and the second plate are joined as a single plate. The heat insulator may include a support part supporting the first plate and the second plate to maintain the first distance and the second distance in the central part and the side part, respectively.

In an embodiment, the support part may include a first frame supporting the first plate in the sealed space or in the vicinity thereof. The support part may include a second frame supporting the second plate in the sealed space or in the vicinity thereof. The support part may include a pillar including a plurality of pillars supporting the first frame and the second frame to maintain an distance between the first frame and the second frame.

In an embodiment, the first frame and/or the second frame may include frame steps corresponding to shapes of the first and/or second plates having the step gradients. The first frame and/or the second frame may include a central support part supporting an interior of a central part of the heat insulator. The first frame and/or the second frame may include a side support part formed to extend from the central support part and support an interior of the side part of the heat insulator. The support part may include a first pillar including a plurality of pillars supporting between the central support part of the first frame and the central support part of the second frame for the central support part of the first frame and the central support part of the second frame to maintain a first frame distance. The support part may include a second pillar including a plurality of pillars supporting between the side support part of the first frame and the side support part of the second frame for the side support part of the first frame and the side support part of the second frame to maintain a second frame distance.

In an embodiment, the support part may include a first support part formed to support one region of the first plate and one region of the second plate corresponding to the central part in the sealed space or in the vicinity thereof.

The support part may include a second support part formed regions other than the regions of the first and second plates corresponding to the side part, and separated from the second support part.

In an embodiment, the first support part may include a first frame supporting one region of the first plate corresponding to the central part. The first support part may include a second frame supporting one region of the second plate corresponding to the central part. The first support part may include pillars supporting an distance between the first frame and the second frame. The second support part may include a central frame extending from the central part, and disposed between extended regions of the first and second plates forming the side part. The second support part may include a plurality of support parts formed to protrude in a vertical direction from the central frame, and support an distance between the extended regions of the first and second plates.

In an embodiment, at least one of the plurality of pillars may be formed to protrude from the first frame and the rest of the plurality of pillars may be formed to protrude from the second frame The plurality of pillars formed to protrude from the first frame may be inserted and/or coupled into a plurality of coupling grooves formed in the second frame, respectively. The plurality of pillars formed to protrude from the second frame may be inserted and/or coupled into a plurality of coupling grooves formed in the first frame, respectively.

In an embodiment, the pillars and the coupling grooves may be formed in the first frame and the second frame alternately at predetermined distances. The pillars and the coupling grooves may be formed to be crossed in the first frame and the second frame.

In an embodiment, at least one shielding plate for preventing heat radiation may be disposed between the first frame and the second frame in a direction parallel to the first frame and/or the second frame.

In an embodiment, a plurality of shielding plates disposed in parallel to the first frame or the second frame may be stacked at a predetermined distance between the first frame and the second frame. Interval maintaining blocks for maintaining the predetermined distance may be inserted between the plurality of shielding plates.

In an embodiment, the shielding plate may include a plurality of coupling pins to be coupled to the other shielding plate. A recess into which a portion is recessed may be formed at one end of the coupling pin to be coupled to a coupling pin of the other shielding plate. A coupling protrusion portion formed to protrude by a predetermined length so that a portion may be inserted into a recess formed at a coupling pin of another shielding plate may be formed at the other end of the coupling pin. A recess and a coupling protrusion portion of each of the plurality of coupling pins formed in each shielding plate may be coupled to a coupling protrusion portion and a recess of the other shielding plate, respectively, so that a plurality of shielding plates may be stacked at a predetermined distance. A coupling protrusion portion of a coupling pin positioned at a terminal among the plurality of coupling pins coupled to each other may be coupled to the coupling groove formed in the first frame or the second frame to couple and fix the plurality of stacked shielding plates to the support part.

In an embodiment, the first plate and the second plate may form an arch-shaped curved surface in a direction approaching each other. The first plate and the second plate may be gently bent or may form the steps.

In an embodiment, the corner part is joined to an corner part of the other heat insulator and the joined corner part is bent according to a structural shape of a target device, so that a plurality of different heat insulators form the structural shape of the target device.

In an embodiment, a first insulating material covering an outer surface of the bent corner part and/or an outer surface of the side part may be provided. An assembly block may be provided to be disposed along a structural exterior shape of the target device, and coupled to a coupler passing through the first insulating material and the bent corner part to couple the first insulating material and the bent corner part.

In an embodiment, a second insulating material covering an inner surface of the bent corner part and/or an outer surface of the side part may be provided. The coupler passes through the first insulating material, the bent corner part, and the second insulating material, and is coupled to the assembly block to couple the first insulating material, the bent corner part, and the second insulating material.

In an embodiment, the second insulating material may have a shape of a polygon (e.g., a triangle) having a center of the bent corner part as a vertex and/or including an opposite side part facing an inner angle of the vertex. The second insulating material is formed to include an extension portion that extends beyond the opposite side part from the center of the bent corner part along a heat insulator connected through the corner part.

### [Advantageous Effects]

According to at least one of the embodiments of the present invention, a heat insulator of the present invention includes a first frame for supporting a first plate (upper surface) of the heat insulator and/or a second frame for supporting a second plate (lower surface) according to the shape of an internal space including a central part and side parts forming a vacuum in the heat insulator, and a pillar including a plurality of pillars for supporting a space between the first frame and the second frame. Therefore, the present invention has an effect of improving the structural strength of the central part and/or the side part of the heat insulator by distributing the load applied to the central part as well as the side part of the heat insulator by the first frame, the second frame, and/or the pillars.

According to at least one of the embodiments of the present invention, the heat insulator of the present invention further includes a first insulating material and a second insulating material disposed to cover an interior and an exterior of an corner part of the heat insulator connected to an corner part of the other heat insulator, thereby obtaining an effect of preventing heat loss due to exposure of the corner part to the air.

### [Description of Drawings]

FIG. 1 is a perspective view showing an exterior appearance of a refrigerator according to an embodiment of the present invention.
FIG. 2 is a conceptual view for describing a vacuum heat insulator provided in the refrigerator of FIG. 1.
FIG. 3 is a conceptual view for describing a third plate provided in a plate of FIG. 2.
FIG. 4 is a conceptual view for describing a thermal insulator provided in the plate of FIG. 3.
FIG. 5 is a cross-sectional view illustrating a structure of a heat insulator including a central part, a side part, and/or an corner part according to an embodiment of the present invention.
FIG. 6 is a plan view illustrating a first insulating material and/or a second insulating material disposed to cover a portion (e.g., an exterior and an interior) of an corner part of a heat insulator which is connected to an corner part of the other heat insulator according to an embodiment of the present invention.
FIG. 7 is a perspective view of an inner assembly member illustrated in FIG. 6 above.
FIG. 8 is an exemplary diagram illustrating examples of a heat insulator having a support part, the first insulating material, and/or the second insulating material according to an embodiment of the present invention.
FIG. 9 is an exemplary diagram illustrating examples of a heat insulator having a support part, the first insulating material, and/or the second insulating material according to another embodiment of the present invention.
FIG. 10 is an exemplary diagram illustrating a heat insulator having a support part disposed inside a first plate and/or a second plate according to an embodiment of the present invention.
FIG. 11 is an exemplary diagram illustrating the support part of FIG. 10 above.
FIG. 12 is an exemplary diagram illustrating a frame on one side surface where pillars and/or holes are formed in the support part in FIG. 10 above.
FIG. 13 is an exemplary diagram illustrating an example of a structure of a pillar including at least one shielding plate between a first frame and a second frame according to another embodiment of the present invention.
FIG. 14 is an exemplary diagram of a support part having a structure of a central support part and/or a side support part according to yet another embodiment of the present invention.
FIG. 15 is a perspective view illustrating a support part having the structure of FIG. 14 above.
FIG. 16 is an enlarged view of a portion of the support part illustrated in FIG. 15 above.
FIG. 17 is an exemplary diagram illustrating an example of the central support part and/or the side support part formed in the structure.
FIG. 18 is an exemplary diagram illustrating a cross-section of a heat insulator in which an interior is supported by the central support part and/or the side support part formed in the structure.

### [Best Mode]

It is noted that technical terms used in this specification are used to just describe a specific embodiment and do not intend to limit the present invention. A singular form used in this specification may include a plural form if there is no clearly opposite meaning in the context. In this specification, a term such as "comprising" or "including" should not be interpreted as necessarily including all various components or various steps disclosed in this specification, and it should be interpreted that some component or some steps among them may not be included or additional components or steps may be further included.

Further, in describing technologies disclosed in this specification, a detailed description of related known technologies will be omitted if it is determined that the detailed description makes the gist of the technology disclosed in this specification unclear.

Hereinafter, a [Common Description] is described which describes parts commonly defined in all embodiments of the present invention.

Optionally, a heat insulator of the present invention may be provided as one heat insulator. As an example, the heat insulator may provide a first wall extending in one direction; and a second wall extending in a direction different from the one direction. Optionally, the heat insulator of the present invention may include a first heat insulator and a second heat insulator. The second heat insulator may be provided as a separate component separated from the first heat insulator. The second heat insulator may be connected to the first heat insulator by a connector. In the present invention, the connector may be defined as a joint. The second heat insulator may include a portion extending in the same direction as the first heat insulator. The second heat insulator may include a portion extending in a different direction from the first heat insulator. The second heat insulator may include a portion connected to the first heat insulator, or may include a portion disposed to overlap with the first heat insulator in at least one direction. The heat insulator may be a vacuum adiabatic body including a vacuum space portion or a non-vacuum adiabatic body not including the vacuum space portion. The heat insulator may be a combination of the vacuum adiabatic body and the non-vacuum adiabatic body. The vacuum space portion provided in the second heat insulator may include a portion extending in the same direction as the vacuum space portion provided in the first heat insulator. The vacuum space portion provided in the second heat insulator may include a portion extending in a different direction from the vacuum space portion provided in the first heat insulator. The vacuum space portion provided in the second heat insulator may include a portion disposed to overlap with the vacuum space portion provided in the first heat insulator in at least one direction. The heat insulator may be provided in the form of a panel. In the present invention, a "panel" is described below as an example, and an invention in which the "panel" is replaced with the "heat insulator" may also be included in the present invention. For example, in the present invention, if it is described below that at least two panels of a main body form an exterior of a refrigerator, in relation to this, in the present invention, at least two heat insulators of the main body may be understood or interpreted as forming the exterior of the refrigerator.

Optionally, the refrigerator of the present invention may include a main body. The main body may include at least one storage chamber. The main body may include a partition wall that separates a first storage chamber and a second storage chamber. A first storage chamber joint may include a first-first chamber joint, a second-first chamber joint, and/or a third-first chamber joint. A second storage chamber joint may be provided on one side of the second storage chamber. The second storage chamber joint may include a first joint, a second joint, and/or a third joint.

The partition wall may include the vacuum adiabatic body and/or the non-vacuum adiabatic body. The refrigerator of the present invention may include a door. The refrigerator of the present invention may include a machine chamber disposed on one side of the main body. In the machine chamber, one or more of a compressor, heat dissipation components (e.g., a condenser, a heat dissipation portion of a thermoelectric module, a heat sink that exchanges heat with the heat dissipation portion of the thermoelectric module, etc.), and a cooling fan may be disposed. The machine chamber may include one or more of a first cover (e.g., a side cover) forming at least a portion of a first surface (e.g., a side surface), a second cover (e.g., a back cover) forming at least a portion of a second surface (e.g., a rear surface), a third cover (e.g., an upper cover) forming at least a portion of a third surface (e.g., an upper surface), a fourth cover (e.g., a bottom cover) forming at least a portion of a fourth surface (e.g., a bottom surface), and a fifth cover (e.g., a front cover) forming at least a portion of a fifth surface (e.g., a front surface). One or more of the first, second, third, fourth, and fifth covers may be provided as a single component or may be provided in plurality. The machine chamber in the refrigerator of the present invention may include the heat insulator.

The panel may include one or more of a first plate, a second plate, and a side plate. A vacuum space portion may be provided between the first plate and the second plate. A refrigerator of the present invention may include at least one panel. The present invention may include one or more of a first panel forming at least a portion of a first surface (e.g., side surface) of the refrigerator; a second panel forming at least a portion of a second surface (e.g., rear surface) of the refrigerator; a third panel forming at least a portion of a third surface (e.g., upper surface) of the refrigerator; a fourth panel forming at least a portion of a fourth surface (e.g., bottom surface) of the refrigerator; and a fifth panel forming at least a portion of a fifth surface (e.g., front surface) of the refrigerator. One or more of the first, second, third, fourth, and fifth surfaces of the refrigerator may provide at least a portion of a wall forming the main body or may provide at least a portion of a wall forming the door. One or more of the first, second, third, fourth, and fifth panels may be provided as a single component or may be provided in plurality. The joint may be provided to connect edges of the refrigerator or to connect a first wall and a second wall forming walls of the refrigerator to each other. The joint may be provided to connect the panel to another component (e.g., another panel). The joint may be provided to connect at least two of the first, second, third, fourth, and fifth panels. One or more of the first, second, third, fourth, and fifth panels may be provided in plurality, and the joint may be provided to connect the plurality of panels to each other. The joint may include a first surface, a second surface, and/or a third surface. The first surface of the joint may cover at least a portion of at least one of the first, second, third, fourth, and fifth panels. The second surface of the joint may cover at least a portion of at least the other one of the first, second, third, fourth, and fifth panels. The third surface of the joint may be connected to the first surface of the joint and/or the second surface of the joint. The third surface of the joint may be connected to an corner of the first surface of the joint and/or an corner of the second surface of the joint. The third surface of the joint may be formed to be inclined to at least one of the first surface of the joint and the second surface of the joint. At least some of the first, second, third, fourth, and fifth panels may be provided as panels having a first insulation performance per unit thickness, and at least some others of the first, second, third, fourth, and fifth panels may be provided as panels having a second insulation performance per unit thickness. The first heat insulation performance and the second heat insulation performance may be different.

The heat insulator or refrigerator of the present invention may include ducts. The ducts may include a first duct, a second duct, and/or a third duct. The first duct may supply cold air to the first storage chamber or the second storage chamber. The second duct may receive an evaporator. The third duct may be connected in communication with the first duct and the second duct. The third duct may include a first surface, a second surface, a third surface, a fourth surface, and/or a fifth surface. The first surface of the third duct may wrap the first surface of the joint. The second surface of the third duct may wrap the second surface of the joint. The third surface of the third duct may wrap the third surface of the joint. The third duct may include the fourth surface. The fourth surface of the third duct may extend on the first surface or may be disposed to face the second storage chamber. The fifth surface of the third duct may extend on the second surface of the third duct or may be disposed to face the evaporator.

The heat insulator or refrigerator of the present invention may include a block. The block may include a portion extending in the same direction as one or more of the first, second, third, fourth, and fifth panels. The block may include a portion extending in a different direction from one or more of the first, second, third, fourth, and fifth panels. The block may include a first surface (e.g., left surface), a second surface (e.g., right surface), a third surface (e.g., rear surface), a fourth surface (e.g., bottom surface), a fifth surface (e.g., upper surface), and a sixth surface (e.g., front surface). Some of the first, second, third, fourth, and fifth surfaces of the refrigerator may be provided in the form of the panel, and some others of the first, second, third, fourth, and fifth surfaces of the refrigerator may be provided in the form of the block. The block may be provided as the non-vacuum adiabatic body. As an example, the block may be a block cover and/or PU foam filled inside the block cover. The block may include one or more of a first block portion (e.g., side-surface block portion), a second block portion (e.g., rear-surface block portion or front block portion), and a third block portion (e.g., bottom-surface block portion or upper-surface block portion). The first, second, and third block portions may each be provided in plurality. At least two or more of the first, second, and third block portions may be connected to be provided as the joint. The third block portion may form one surface of the first storage chamber and/or form one surface of the machine chamber. The third block portion may be provided as a partition wall or may form one surface of the first storage chamber.

The heat insulator or refrigerator of the present invention may include a heat insulation reinforcement portion. The heat insulation reinforcement portion may include a portion connected to one side of the block or may include a portion formed to protrude on the block.

The heat insulator or refrigerator of the present invention may include a hinge. The hinge may be disposed on one side of the heat insulator. The hinge may be disposed on the main body and/or door of the refrigerator.

The hinge may include one or more of a hinge fixing portion, which is a portion where the hinge is coupled to at least one of the heat insulator, the body of the refrigerator, and the door of the refrigerator, a hinge shaft, and a hinge connecting portion, which is a portion extending to protrude from the hinge fixing portion. The hinge may include one or more of a first hinge (e.g., upper hinge) disposed on one side of a wall forming the first storage chamber, a second hinge (e.g., middle hinge) disposed on the partition wall, and a third hinge (e.g., lower hinge) of a wall forming the second storage chamber. The heat insulator or refrigerator of the present invention may include one or more of a hinge reinforcement frame that reinforces a strength of the hinge; a cover to which the hinge is coupled; and a hinge reinforcement plate disposed to be connected to or received in the panel. The hinge reinforcement frame may include one or more of first, second, third, and fourth frame portions. At least two of the first, second, third, and fourth frame portions may extend in different directions.

The heat insulator or refrigerator of the present invention may include a support frame. The support frame may support one surface of the panel. The support frame may include a coupling portion. The block may be supported in the machine chamber by the support frame. The support frame may include a first support frame and/or a second support frame.

The heat insulator or refrigerator of the present invention may include an inner cover. The inner cover may be disposed between the cover of the machine chamber and the hinge reinforcement frame (e.g., the first frame portion).

The heat insulator or refrigerator of the present invention may include a deco. The deco may be disposed on a surface of the heat insulator. The deco may be disposed on a surface of the main body and/or the door of the refrigerator. As an example, the deco may be disposed on an outer surface of the heat insulator or on an outer surface of the refrigerator.

The heat insulator or refrigerator of the present invention may include a hot line. The hot line may be disposed on the surface of the heat insulator. The hot line may be disposed on the surface of the main body and/or the door of the refrigerator. The hot line may be disposed between the deco and the surface of the heat insulator. The hot line may be disposed between the deco and the surface of the refrigerator and/or between the deco and the surface of the door.

The heat insulator or refrigerator of the present invention may include a casing. The casing may be an exterior casing or an interior casing. The exterior casing may be connected to the second plate. The exterior casing may be provided to cover at least a portion of the second plate. The exterior casing may be provided in contact with the second plate or spaced apart from the second plate by a predetermined distance. The interior casing may be connected to the first plate. The interior casing may be provided to cover at least a portion of the first plate. The interior casing may be provided in contact with the first plate or spaced apart from the first plate by a predetermined distance.

The heat insulator or refrigerator of the present invention may include a drawer and/or a drawer guide. The drawer guide may include a first storage chamber drawer guide provided in the first storage chamber. The first storage chamber drawer guide may include at least one of a first plate (e.g., side plate), a second plate (e.g., bottom plate), a third plate (e.g., upper plate), and a fourth plate (e.g., middle plate).

The drawer guide may include a second storage chamber drawer guide provided in a second storage chamber.

The heat insulator or refrigerator of the present invention may include a shelf and/or a shelf support frame.

[Detailed Description for Implementing the Invention] is divided into the foregoing [Common Description] and the following [Description Based on Drawings]. In the [Detailed Description for Implementing the Invention], each specific matter described for implementing the invention may be understood as an embodiment of the present invention. In the [Detailed Description for Implementing the Invention], a combination of at least two or more of the specific matters described for implementing the invention may also be understood as an embodiment of the present invention. For example, in the [Detailed Description for Implementing the Invention], each paragraph of the [Common Description] section or the section described based on the drawings, as well as a combination of such paragraphs, may be understood as an embodiment of the present invention. In another example, in the [Detailed Description for Implementing the Invention], each sentence of the [Common Description] section or the section described based on the drawings, as well as a combination of such sentences, may be understood as an embodiment of the present invention.

Hereinafter, based on each drawing, the [Description based on drawing] section describing the present invention will be described.

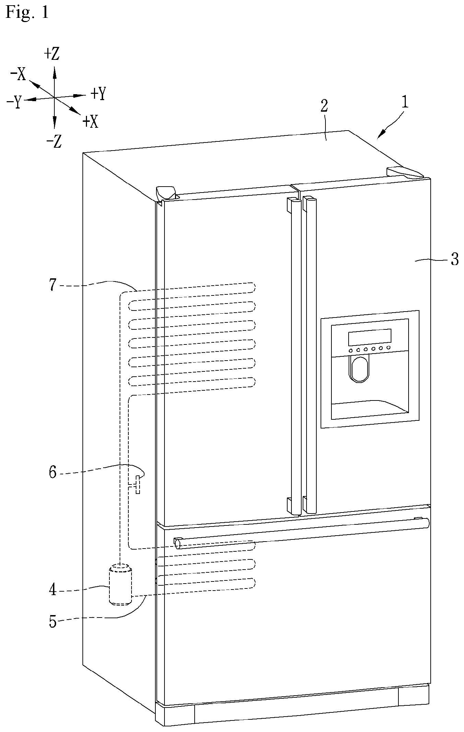

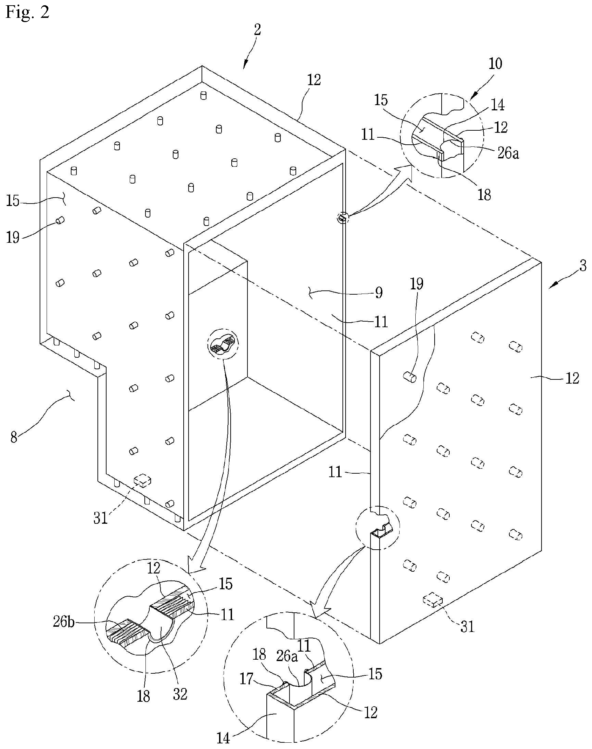

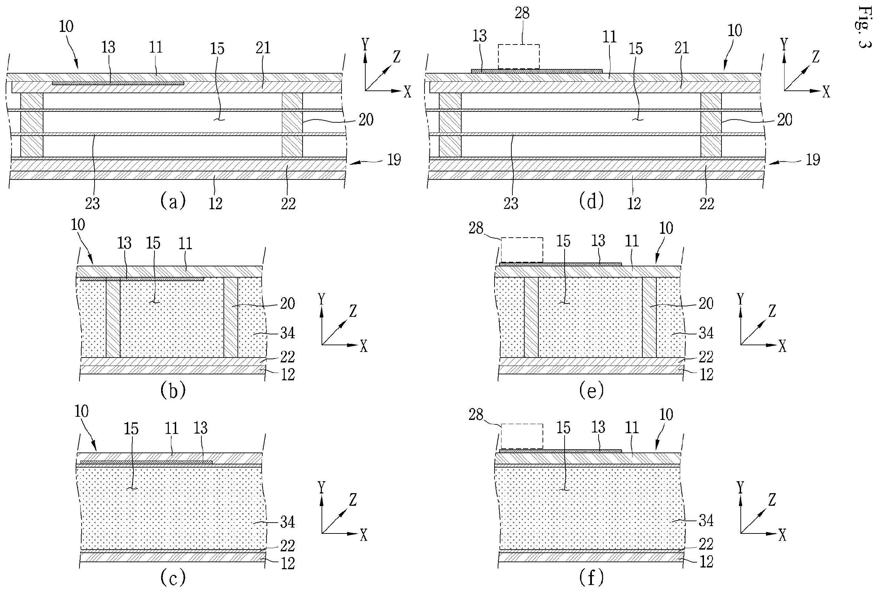

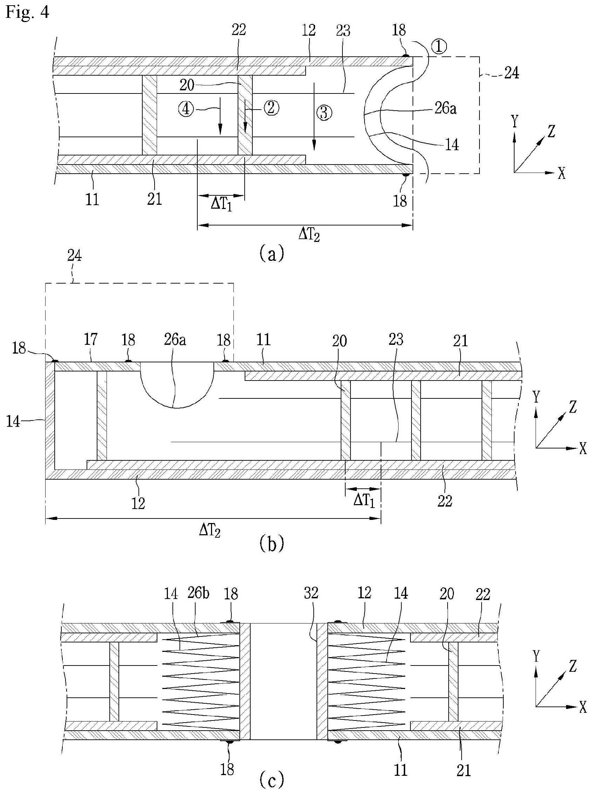

Referring to FIGS. 1 to 4, the heat insulator 10 of the present invention may include plates 11, 12, and 14. In the present invention, the term "plate" may refer to at least one of the first and second plates 11 and 12, and the side plate 14. Optionally, the heat insulator of the present invention may include a vacuum space portion 15. The vacuum space portion 15 may be formed by walls provided by the plates 11, 12, and 14. The vacuum space portion 15 may have a thickness in a first direction. The plates 11, 12, and 14 may include the first plate 11; and the second plate 12. The first plate 11 may include a portion extending in a direction different from the first direction. The second plate 12 may include a portion extending in a first direction different from the first direction. Optionally, the plates may include a side plate 14 including the portion extending in the first direction. As an example, the heat insulator 10 of the present invention may be provided such that the first and second plates 11 and 12 and the side plate 14 are each provided as separate components, and the separate components are connected to each other. As another example, the heat insulator 10 of the present invention may be provided such that at least two components among the first and second plates 11 and 12 and the side plate 14 are provided integrally, and the separated components are connected to each other. As yet another example, in the heat insulator 10 of the present invention, portions connecting the first and second plates 11 and 12 and the side plate 14 to each other may be each provided integrally. In this case, the first plate 11 may be provided as separated components, and the separated components may be provided to be connected to each other. Alternatively, the second plate 12 may be provided as separated components, and the separated components may be provided to be connected to each other. Alternatively, the side plate 14 may be provided as separated components, and the separated components may be provided to be connected to each other. Optionally, the heat insulator 10 of the present invention may include a third plate disposed on at least a portion of the heat insulator 10 or connected to at least a portion of the plates 11, 12, and 14. The third plate may include a portion that is thinner than or has the same thickness as the plates 11, 12, and 14. The third plate may include a portion that is provided thicker than the plates 11, 12, and 14. The third plate may be disposed in the vacuum space portion 15 or may be disposed outside the vacuum space portion 15. Examples of the third plate may be thermal insulators 23, 26a, 26b, and 34, a deformation resistor 13, etc., described in the present invention.

Optionally, the heat insulator 10 of the present invention may include thermal insulators 23, 26a, 26b, and 34 for reducing a heat transfer amount between a first space provided in the vicinity of the first plate 11 and a second space provided in the vicinity of the second plate 12, or for reducing a heat transfer amount between the first plate 11 and the second plate 12. A thermal insulator that reduces a heat transfer amount by conduction may be defined as conduction resistance sheets 26a and 26b, and a thermal insulator that reduces a heat transfer amount by radiation may be defined as a radiation resistance sheet 23. The thermal insulators 23, 26a, 26b, and 34 may be provided as a porous material 34 or provided as a filler 34. A filler having an interior filled with a porous material may be defined as a porous material 34. The thermal insulators 23, 26a, 26b, and 34 may be at least one of the radiation resistance sheet 23, the porous material 34, the filler 34, and the conduction resistance sheets 26a and 26b, or may include a mixture of at least two thereof. The thermal insulators 23, 26a, 26b, and 34 may be provided to be connected to at least a portion of the plates 11, 12, and 14 or not to contact the plates 11, 12, and 14. A shield 24 may be provided outside the thermal insulators 23, 26a, 26b, and 34 for thermal insulation. A connection frame 17 may be provided outside the thermal insulators 23, 26a, 26b, and 34. The heat insulator 10 may include a conduit penetrating the vacuum space portion 15. The conduit may be formed by providing a pipe wall 32 as a separate component, or provided in a form in which the pipe wall 32 is omitted and only a through-hole is formed in the plates. The side plate 14 or the thermal insulators 23, 26a, 26b, and 34 may be provided in the vicinity of the conduit.

Optionally, the heat insulator 10 of the present invention may include a deformation resistor 13 connected to at least a portion of the plates 11, 12, and 14 to increase deformation resistance of the plates 11, 12, and 14. When the deformation resistor is provided in a plate form, the deformation resistor may be referred to as a deformation resistance plate.

Optionally, the heat insulator 10 of the present invention may include a support 19 connected to at least a portion of the plates 11, 12, and 13 and holding the vacuum space portion 15. The support 19 may include a bar 20 having a portion extending in a first direction that is a thickness direction of the vacuum space portion 15. The support 19 may include a support plate 22 having a portion extending in a direction different from the first direction. The support 19 may include a plurality of bars 20 and a connection plate 21 connecting the plurality of bars 20. The support 19 may include at least one of the bar 20, the connection plate 21, and the support plate 22, or may include a mixture of at least two thereof.

Optionally, the heat insulator 10 of the present invention may include a component coupling portion providing a portion where the components 24, 28, and 32 are disposed or supported. As an example, when the component coupling portion is provided in the form of a plate, the component coupling portion may be referred to as a component coupling plate. The component connected to the component coupling portion may include a penetrating component disposed to penetrate at least a portion of the heat insulator 10 or at least a portion of the plates 11, 12, and 14. The component connected to the component coupling portion may include a surface component disposed to be connected to a surface of the heat insulator 10 or to surfaces of the plates 11, 12, and 14. The penetrating component may be a component forming a path through which fluids (electricity, refrigerant, water, and air, etc.) pass. The penetrating component may be provided in the form of a pipe. The pipe may include a straight pipe and/or a curved pipe. The pipes may be provided in plurality or may extend in one direction. The penetrating component may include at least one of the pipe, a first withdrawal portion, and a second withdrawal portion. In the present invention, the fluids are defined as all kinds of flowing objects. The fluids include moving solids, liquids, gases, electricity, etc. The penetrating component may be a component forming a path through which refrigerant for heat exchange passes, such as a Suction Line Heat Exchanger (SLHX) or a refrigerant pipe. The SLHX may be understood as a suction line heat exchanger that causes heat exchange between refrigerant that passes through an evaporator and refrigerant before entering the evaporator. The penetrating component may be an electric wire that supplies electricity to an apparatus. The penetrating component may be a component forming a path through which air may pass, such as a duct or port along whose surface the fluid flows. The port may include an exhaust port providing a path through which air is exhausted from a space formed between the first plate 11 and the second plate 12 in order to form the vacuum space portion 15. The penetrating component may be a path through which fluids such as cooling water, hot water, ice, and defrost water may pass. Examples of the surface component may be a peripheral insulation material, side panels, injected foam, a pre-prepared resin, hinges, latches, baskets, drawers, shelves, lighting, sensors, an evaporator 7, a front deco, and hot lines, heaters, exterior covers, interior covers, etc.

Through FIGS. 1 to 4, terms such as plate, first plate, second plate, side plate, third plate, vacuum space portion, thermal insulator, conduction resistance sheet, radiation resistance sheet, porous material, filler, component coupling portion, joint, support, bar, support plate, connection plate, deformation resistor, deformation resistance plate, component coupling portion, component coupling plate, penetrating component, surface component, duct, port, etc., are defined. In the present invention, when the terms are used in portions other than the portions where descriptions of FIGS. 1 to 4 are provided, the used terms should be interpreted as defined in FIGS. 1 to 4.

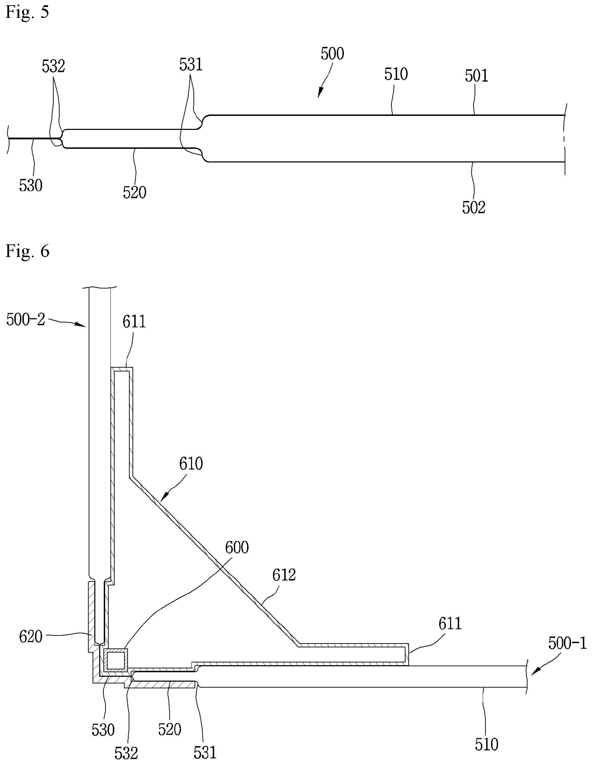

In the present invention, object A being connected to object B may be defined as at least a portion of object A and at least a portion of object B being directly connected, or at least a portion of object A and at least a portion of object B being connected through an intermedium interposed between objects A and B. As a modified example, object A being connected to object B may include object A and object B being integrally prepared in a shape connected by the aforementioned method. In the present invention, embodiments of connection may support, combine, and seal, which will be described later. In the present invention, object A being supported by object B may be defined as object A being restricted from movement in one or more directions among the +X, -X, +Y, -Y, +Z, and -Z axis directions by object B. In the present invention, an embodiment of support may be combine and seal, which will be described later. In the present invention, object A being coupled with object B may be defined as object A being restricted from movement in one or more directions among the X, Y, and Z axis directions by object B. In the present invention, an embodiment that combines may be a seal, which will be described later. In the present invention, object A being sealed to object B may be defined as a state in which fluid movement is not permitted at a portion where object A and object B are connected. In the present invention, one or more objects, that is, at least a portion of object A and object B, may be defined as including a portion of object A, the entirety of object A, a portion of object B, the entirety of object B, a portion of object A and a portion of object B, a portion of object A and the entirety of object B, the entirety of object A and a portion of object B, and the entirety of object A and the entirety of object B. In the present invention, plate A being a wall defining space A may be defined as at least a portion of plate A being a wall forming at least a portion of space A. That is, at least a portion of plate A may be the wall forming space A, or plate A may be the wall forming at least a portion of space A. In the present invention, a central part of an object may be defined as a portion located at the center among three equally divided portions when the object is divided into three equal parts based on a lengthwise direction of the object. A peripheral portion of the object may be defined as a portion located on one side or the other side of the central part among the three equally divided portions. The peripheral portion of the object may include a surface contacting the central part and a surface on an opposite side thereof. The surface on the opposite side may be defined as a border or corner of the object. In the present invention, a degree of deformation resistance represents a degree to which an object resists deformation, and may be defined as a value determined by a shape including thickness of the object, a material of the object, and a processing method of the object. In the present invention, a degree of heat transfer resistance represents a degree to which an object resists heat transfer, and may be defined as a value determined by a shape including thickness of the object, a material of the object, and a processing method of the object. In the present invention, the degree of heat transfer resistance may be defined as at least one or a sum of at least two or more among a degree of conduction resistance, a degree of radiation resistance, and a degree of convection resistance. The terms "upper side", "lower side", "right side", "left side", "front side", and "rear side" used in the following description will be understood through a coordinate system shown in FIGS. 1 and 5. An example of "+Z" means "upper side", an example of "-Z" means "lower side", an example of "+Y" means "right side", an example of "-Y" means "left side", an example of "+X" means "front side", and an example of "-X" means "rear side". A front-rear direction used in this specification may be an example of the X-axis direction, a left-right direction may be an example of the Y-axis direction, and an up-down direction may be an example of the Z-axis direction.

The heat insulator 10 of the present invention may be applied to a refrigerator 1. The refrigerator 1 may include a main body 2 provided with a cavity 9 capable of storing stored items, and a door 3 provided to open and close the main body 2. A cold source for supplying cold air to the cavity 9 may be provided. As an example, the cold source may be an evaporator 7 that evaporates refrigerant to remove heat. The refrigerator may include a compressor 4 that compresses the refrigerant. The refrigerator may include a condenser 5 that condenses the compressed refrigerant. The condenser 5 may be connected to an expander 6 that expands the condensed refrigerant.

Hereinafter, embodiments disclosed in this specification will be described in detail with reference to the accompanying drawings.

FIG. 5 is a cross-sectional view illustrating a structure of a heat insulator 500 including a central part 510, a side part 520, and/or an corner part 530 according to an embodiment of the present invention.

First, the heat insulator 500 according to an embodiment of the present invention may be formed in an envelope shape, as illustrated in FIG. 5, and may be implemented with a first plate 501 and a second plate 502 forming a vacuum region. The heat insulator 500 may include a space where the vacuum region is formed, including a sealed space in which vacuum is formed, and an corner part 530 not including a space where the vacuum region is formed. The space where the vacuum region is formed may include a central part 510 and/or a side part 520. The side part may extend from the central part 510 to the corner part 530 and/or may be formed between the center portion 510 and the corner part 530. Here, the central part 510 and the side part 520 may be distinguished by a thickness difference in the space where the vacuum region is formed, as illustrated in FIG. 5.

The side part 520 is configured to effectively distribute a load applied to a side surface of the heat insulator 500, i.e., the corner part 530, and may be formed between the central part 510 and the corner part 530. The first plate 501 and the second plate 502 may form an arch-shaped curved surface in a direction approaching each other, and/or may be primarily bent gently. An entrance portion (first step) 531 of the side part 520 having a thickness thinner than a thickness of the vacuum space of the central part 510 may be formed. At a terminal portion (second step) 532 of the side part 520, the first plate 501 and the second plate 502 may again form the arch-shaped curved surface in a direction approaching each other, and/or may be secondarily bent gently. The corner part 530 where the first plate 501 and the second plate 502 are joined may be formed.

That is, as illustrated in FIG. 5, in the heat insulator 500 in which the vacuum space is formed in an envelope form according to an embodiment of the present invention, the first plate 501 and the second plate 502 forming the vacuum space may each have a step gradient including the first step 531 and the second step 532 formed in directions approaching each other. Based on the first step 531 and the second step 532, the structure may be divided into three parts of the central part 510, the side part 520, and the corner part 530. That is, based on the first step 531 and the second step 532, the first plate 501 and the second plate 502 may gradually approach each other, i.e., a separation distance between the first plate 501 and the second plate 502 may be reduced gradually. The first plate 501 and the second plate 502 have the same shape and may be plates that may be used in common.

As such, a sealing space may be formed according to the central part 510 and/or the side part 520 by being sealed by the corner part 530 formed at an corner. By forming air pressure in the sealing space lower than external air pressure (e.g., vacuum), an envelope-shaped heat insulator 500 that provides thermal insulation may be formed.

Meanwhile, as illustrated in FIG. 5, the heat insulator 500 having the corner part 530 may be coupled to the other heat insulator due to joining (e.g., welding) between the corner parts 530. The corner part 530 may be easily bent because the first plate 501 and the second plate 502 are completely joined together into a single plate, as illustrated in FIG. 5. Accordingly, a portion corresponding to the corner part 530 may be formed to be bent along a structural exterior shape of a target device (e.g., refrigerator) and cover an exterior along the structural exterior shape of the target device. That is, a plurality of heat insulators assembled using the corner part 530 may cover the exterior of the target device.

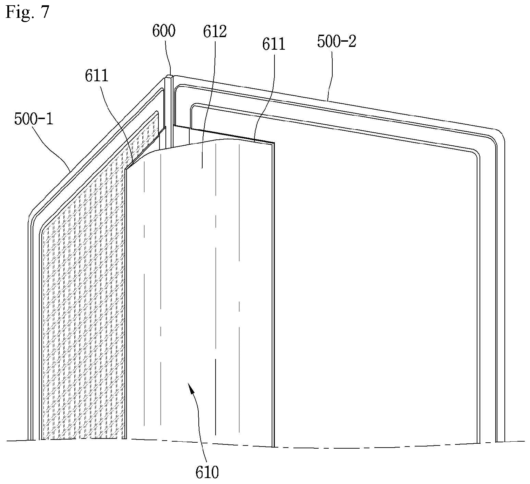

FIG. 6 is a plan view illustrating an example of two heat insulators 500-1 and 500-2 connected to each other through the corner part. FIG. 6 is a plan view illustrating a second insulating material 610 and a first insulating material 620 disposed to cover a portion (e.g., an exterior and an exterior) of the corner part 530 which is bent. FIG. 7 is a perspective view illustrating an example in which the second insulating material 610 described in FIG. 6 above is disposed between the first and second heat insulators 500-1 and 500-2.

First, referring to FIG. 6, the corner parts 530 of the first and/or second insulator 500-1 and/or 500-2 are joined to each other so that the first heat insulator 500-1 and the second heat insulator 500-2 may be coupled. The joined corner parts 530 of the first heat insulator 500-1 and the second heat insulator 500-2 may be bent along the structural exterior shape of the target device (e.g., refrigerator). Accordingly, as illustrated in FIG. 6, through the corner part 530 bent at an angle (e.g., 90 degrees) according to an corner shape of the target device, the first heat insulator 500-1 and the second heat insulator 500-2 which are connected to each other may be formed.

Meanwhile, since the corner part 530 is a portion of the heat insulator 500, cold air within the target device that is insulated from the outside by the heat insulator 500 may be conducted to the corner part 530. However, when the corner part 530 is exposed to air, the cold air in the target device insulated by the heat insulators 500-1 and 500-2 may be lost while heat exchange between the corner part 530 and external air occurs. Therefore, the present invention may provide at least one insulating material that may prevent the corner part 530 from being exposed to the air, in order to prevent the loss of cold air by the thermal conduction to the corner part 530.

As an example, the insulating material may include a insulating material (first insulating material 620) for preventing the corner part 530 from being exposed to air outside the device. As illustrated in FIG. 6, the first insulating material 620 may be formed to cover the corner part 530 bent along the structural shape of the target device and/or formed to be in close contact with the bent corner part 530.

Meanwhile, the first insulating material 620 may be formed to cover the corner part 530 and/or the side part 520 of the heat insulator 500 in order to enhance a close contact with the corner part 530 and/or a heat insulating effect. To this end, the first insulating material 620 may include a step corresponding to a second step 532 formed on an inner-surface plate of each of the first heat insulator 500-1 and the second heat insulator 500-2. The first insulating part 620 may be formed to extend from the second step 532 to a region corresponding to the first step 531 formed on the inner-surface plate of each of the first heat insulator 500-1 and the second heat insulator 500-2. Here, a reference of the inner surface and the outer surface is the target device, and a plate corresponding to the inner surface of the target device of the first and second plates forming the heat insulator may be named the inner-surface plate. A plate corresponding to the outer surface of the target device may be named an outer-surface plate.

Meanwhile, in order to couple the first insulating material 620, the refrigerator may further include an assembly block 600 on an inner side of the bent corner part 530 (based on the target device). The assembly block 600 is disposed such that at least one surface is in close contact with the bent corner part 530. The assembly block 600 may be coupled to the interior of the target device. As an example, as illustrated in FIG. 6, the assembly block 600 may be a coupler disposed at an inner center of the corner part 530 bent along an corner shape of the device. The assembly block 600 is disposed according to the structural exterior shape of the target device, and the corner part 530 may be bent along an outer surface of the assembly block 600 to be bent to correspond to the structural shape of the target device.

In this case, one surface of the assembly block 600 may be in close contact with one side of an corner part 530 connected to the first heat insulator 500-1 and/or, the other one surface adjacent to the one surface may be in close contact with one side of an corner part 530 connected to the second heat insulator 500-2.

Meanwhile, an insertion groove into which a coupler may be inserted may be formed on at least one (hereinafter referred to as a coupling back surface) of the surfaces of the assembly block 600 with which the corner part 530 is in close contact. A first through-hole corresponding to an insertion groove formed on the coupling back surface of the assembly block 600 may also be formed at one region of the corner part 530 which is in close contact with a coupling surface of the assembly block 600. The first insulating material 620 covering the corner part 530 may also have a second through-hole corresponding to the insertion groove and/or the first through-hole. Accordingly, the coupler is inserted into the insertion groove formed in the coupling surface of the assembly block 600 by sequentially passing through the second through-hole formed in the first insulating material 620 and the first through-hole formed in the corner part 530, thereby coupling the coupler and the assembly block 600. As a result, the coupler may be coupled to the assembly block 600. As the coupler is coupled to the assembly block 600, the first insulating material 620 and the corner part 530 may be coupled and/or joined to the assembly block 600. As such, as the corner part 530 is coupled and/or joined to the assembly block 600, the first heat-insulator 500-1 and/or the second heat insulator 500-2 joined through the corner part 530 may be coupled to the assembly block 600, i.e.. the target device.

The assembly block 600 may be made of metal or high-strength plastic having a high strength. The coupler may be a bolt. In this case, a thread groove to which the bolt may be coupled may be formed in the insertion groove.

Meanwhile, the insulating material may be disposed not only outside the device but also inside the device. In this case, the insulating material disposed inside the device to prevent the thermal loss of the corner part 530 will be referred to as the second insulating material 610 to be distinguished from the first insulating material 620.

The second insulating material 610 may be disposed between the assembly block 600 and the corner part 530 which is in close contact with the assembly block 600, as illustrated in FIG. 6, and may be formed to cover an inner surface of the bent corner part 530. As such, when the second insulating material 610 is disposed as well as the first insulating material 620, the corner part 530 connecting the first heat insular 500-1 and the second heat insulator 500-2 may be covered by the first insulating material 620 outside the target device and/or covered by the second insulating material 610 inside the target device. The side surface 520 of each of the first heat insulator 500-1 and/or the second heat insulator 500-2 may be covered by the first insulating material 620 outside the target device and/or covered by the second insulating material 610 inside the target device.

Here, the second insulating material 610 disposed between the assembly block 600 and the corner part 530 may have a third through-hole corresponding to the insertion groove formed on the coupling surface of the assembly block 600 and/or the first through-hole formed in the corner part 530. Accordingly, the coupler is inserted into the insertion groove formed in the coupling surface of the assembly block 600 by sequentially passing through the second through-hole formed in the first insulating material 620, the first through-hole formed in the corner part 530, and the third through-hole formed in the second insulating material 610, thereby coupling the second insulating material 610 as well as the first insulating material 620 to the corner part 530 and the assembly block 600.

Meanwhile, the second insulating material 610 may have a bent shape along the steps of the assembly block 600 and/or the heat insulator 500 with which the second insulating material 610 is in close contact through coupling so as to have a high deformation strength. That is, the second insulating material 610 may have a shape that is bent along the first step 531 formed between the central part 510 and the side part 520 formed on the inner-surface plates of the first insulating material 500-1 and the second insulating material 500-2, and the second step 532 formed between the side part 520 and the corner part 530. The second insulating material 610 may have a shape that is bent along a shape of the assembly block 600 so as to be in close contact with the corner part 530 bent along the second step 532 formed on the inner-surface plate of each of the heat insulators 500-1 and 500-2, and the assembly block 600.

In the case of FIG. 6 described above, the assembly block 600 has been described as an example of a configuration disposed inside the target device, but it is of course possible that the assembly block 600 is disposed outside the target device. Alternatively, the assembly block 600 may be disposed both inside the target device and outside the target device.

Meanwhile, the second insulating material 610 may have a shape that is bent into a shape close to a triangle, as illustrated in FIGS. 6 and 7. In this case, the second insulating material 610 may have a cross-section close to a triangle, with a bent center of the corner part 530 connecting the first insulating material 500-1 and the second insulating material 500-2, i.e., an outer shape corner of the target device, as a vertex between the two sides and including an opposite side part 612 facing an inner angle of the vertex.

In this case, as shown in FIGS. 6 and 7, the second insulating material 610 may have an extension portion 611 that extends longer from the corner of the outer shape of the target device along each of the heat insulators 500-1 and 500-2 beyond the opposite side part 612 than a length from the vertex to the opposite side part 612 along each of the heat insulators 500-1 and 500-2. As a result, a heat bridge effect is minimized to prevent cold air loss.

Meanwhile, the heat insulator 500 may have a support part that may further improve a structural strength in order to efficiently distribute a load such as atmospheric pressure or external force applied to the heat insulator 500.

The support part may be formed to be inserted into the interior of the heat insulator 500 and support the shape of the heat insulator 500. The support part may include a first frame for supporting the first plate 501 (upper surface) of the heat insulator 500 and/or a second frame for supporting the second plate 502 (lower surface). The support part may be formed to include a pillar including pillars supporting a space between the first frame and the second frame.

Meanwhile, the first plate 501 and/or the second plate 502 forming the heat insulator 500 may include steps (first step 531 and/or second step 532). Accordingly, the first plate 501 and the second plate 502 may have step gradients formed in directions gradually approaching each other. According to the shapes of the first plate 501 and/or the second plate 502, the heat insulator 500 may have the step gradients, and according to the step gradients, the heat insulator 500 may be divided into a central part 510 where the vacuum space is formed the thickest, a side part 520 where a vacuum space thinner than the vacuum space thickness of the central part 510 is formed, and an corner part 530 where no vacuum space is formed.

Therefore, the support part for maintaining and/or supporting an internal space of the heat insulator 500 may include a first frame having a step gradient according to the shape of the first plate 501 having the step gradient The support part may include a second frame having a step gradient according to the shape of the second plate 502 having the step gradient. The support part may include a first support part and/or a second support part having different heights of pillars supporting an distance between the first frame and the second frame for maintaining the vacuum space according to a thickness of the vacuum space, which decreases when extending from the central part 510 to the side part 520 according to the step gradient of the heat insulator 500.

For example, in the case of the central part 510 where the thickness of the vacuum space is the thickest, a support part may be disposed in which pillars having a first height for supporting the space between the first frame and the second frame are disposed according to the thickness of the vacuum space formed in the central part 510. In this case, the support part where the pillars having the first height are disposed may be referred to as a first support part.

In contrast, in the case of the side part 520 having the thickness of the vacuum space thinner than the central part 510, a support part may be disposed in which pillars having a second height for supporting the space between the first frame and the second frame are disposed according to the thickness of the vacuum space formed in the side part 520. In this case, the second height may be lower than the first height. The support part in which the pillars having the second height are disposed may be referred to as a second support part. In this case, the support part inserted into the interior of the heat insulator 500 to support the internal space of the heat insulator 500, i.e., the vacuum space may be constituted by the first support part and/or the second support part.

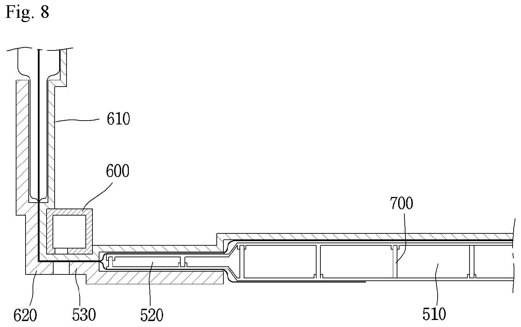

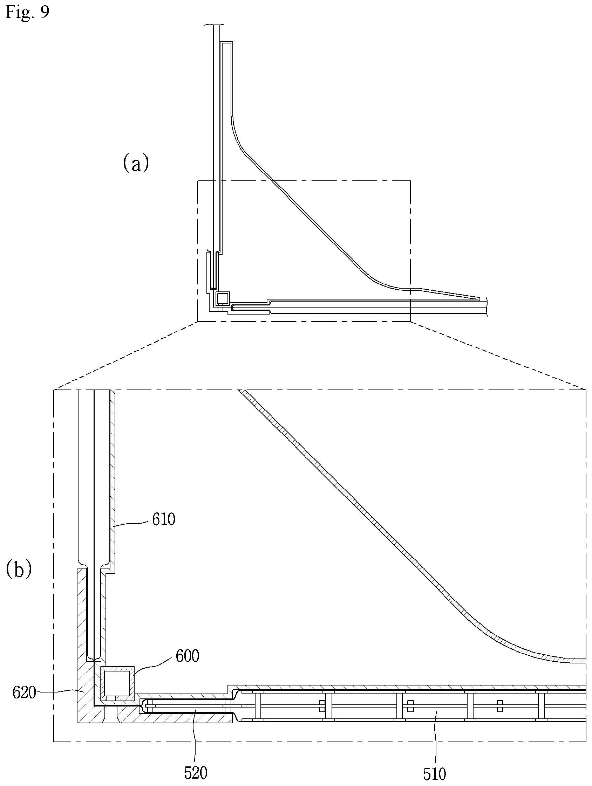

FIG. 8 is an exemplary diagram illustrating examples of a heat insulator having a support part, the second insulating material, and/or the first insulating material according to an embodiment of the present invention. FIG. 9 is an exemplary diagram illustrating examples of a heat insulator having a support part, and/or the second insulating material and the first insulating material according to another embodiment of the present invention.

First, as illustrated in FIG. 8, in the present invention, a support part may be disposed inside the heat insulator 500 in order to support a space (e.g., vacuum space) formed inside the heat insulator 500. The support part may extend to an interior of the central part 510 and/or an interior of the side part 520. The support part may be formed to support up to a portion (e.g., a portion from the first step 531 and/or the second step 532) of the first plate 501 and/or the second plate 502 forming the side part 520.

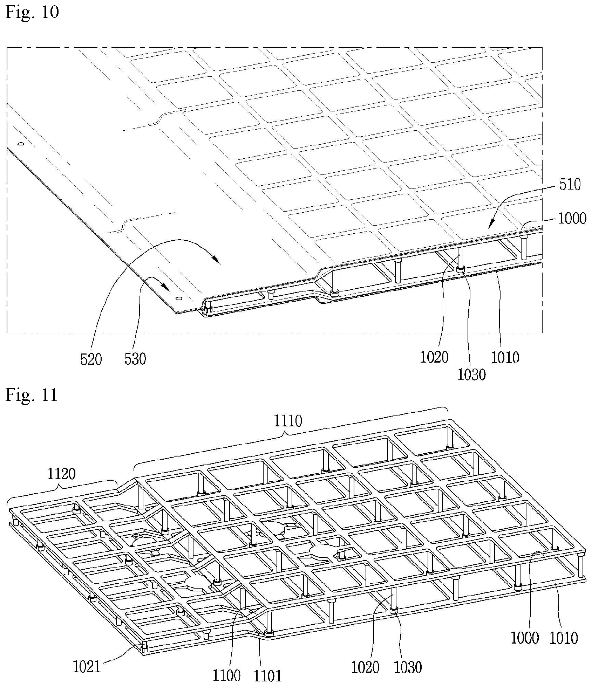

As a result, the present invention may distribute the load applied to the central part 510 as well as the side part 520 of the heat insulator 500 to the first frame, the second frame, and/or the pillars including the support part. The structure of the support part according to an embodiment of the present invention, which is formed integrally to support not only the interior of the central part 510 but also the interior of the side part 520, will be described in more detail with reference to FIGS. 10 to 12 below.

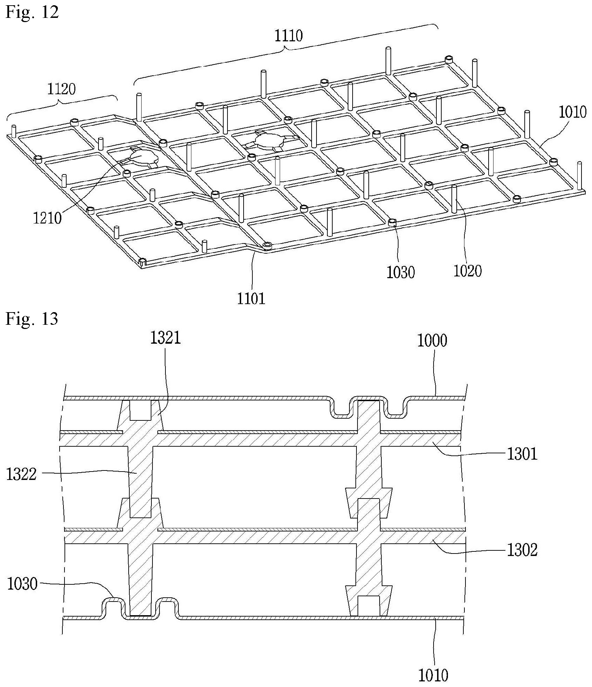

Meanwhile, a support part according to another embodiment of the present invention may have a structure in which at least one shielding plate is disposed between the first frame and the second frame, as illustrated in FIG. 9. In this case, each pillar forming the pillar of the support part may be formed in a shape in which one or more internal pillars formed on the at least one shielding plate are coupled to each other. The structure of the support part according to an embodiment of the present invention, which is formed to include at least one shielding plate, will be described in more detail with reference to FIG. 13 below.

FIG. 10 is an exemplary diagram illustrating an example of a heat insulator in which a support part formed integrally to support not only the interior of the central part 510 but also the interior of the side part 520 is disposed according to an embodiment of the present invention. FIG. 11 is an exemplary diagram illustrating a configuration of the support part.

Referring first to FIG. 10, FIG. 10 illustrates a heat insulator 500 partitioned into the central part 510, the side part 520, and the corner part 530 along the first and/or second plates having step gradients (e.g., two steps) formed in directions approaching each other. FIG. 10 illustrates a first frame 1000 and/or a second frame 1010 disposed inside the heat insulator 500 and/or having step gradients according to the shape of the first and/or second plates having the step gradients. FIG. 10 illustrates examples of a pillar 1020 including pillars supporting a space between the first frame 1000 and the second frame 1010, and a coupling groove 1030 that couples the pillars and is formed in at least one of the first frame 1000 and the second frame 1010.

As illustrated in FIG. 10, the heat insulator 500 according to the embodiment of the present invention may have a side part 520 with a narrower distance between the first and second plates than the central part 510 in order to prevent damage to the central part 510 due to side loads. As a result, the side part 520 may have a vacuum space having a thickness thinner than the thickness of the vacuum space formed inside the central part 510.

Meanwhile, according to the internal shape of the heat insulator 500 in which the side part 520 is formed between the corner part 530 and the central part 510, the support part according to the embodiment of the present invention may extend not only to the interior of the central part 510 of the heat insulator 500 but also to the interior of the side part 520. The support part may be formed to support up to a portion of the first plate 501 and/or the second plate 502 forming the side part 520. That is, the support part may be provided with a side support part 1120 that is formed to extend from a central support part 1110 that supports the interior of the central part 510 of the heat insulator 500, and support the interior of the side part 520 of the heat insulator 500. In this case, the support part may be configured such that the central support part 1110 and the side support part 1120 are integrated.

In order to form the extending side support part 1120 as described above, in the present invention, as illustrated in FIG. 11, the first frame 1000 and/or the second frame 1010 of the support part may have frame steps 1100 and 1101 corresponding to the first steps of the first plate and/or the second plate. In this case, the frame step 1100 of the first frame 1000 and the frame step 1101 of the second frame 1010 may also be formed to be bent along an arch-shaped curved surface to effectively distribute the side loads.

Since the first frame 1000 and the second frame 1010 form the step gradients in the directions approaching each other as described above, heights of pillars supporting the first frame 1000 and the second frame 1010 may also vary. That is, the height (second height) of the pillars 1021 disposed to support an internal region of the side part 520, i.e., the side support part 1120, may be lower than the height (first height) of the pillars 1020 disposed to support an internal region of the central part 510, i.e., the central support part 1110.

Meanwhile, when the first and/or second plates are joined into a single plate at a point where the second step is formed, the vacuum space is no longer formed between the first and second plates. Accordingly, the support part extending to the interior of the side part 520 may extend up to a region where the second step of the first and/or second plates starts, as illustrated in FIG. 10. The first frame 1000 and/or the second frame 1010 may extend up to the region where the second step of the first and/or second plate starts. The pillars having the second height are disposed between the one extending region of the first frame 1000 and one region of the second frame 1010 to support the extending region of the first frame 1000 and the extending region of the second frame 1010, i.e., the side support part 1120.

That is, the central part 510 of the support part may be supported by the central support part of the first frame 1000 and the central support part of the second frame 1010. A pillar (first pillar) including a plurality of pillars having the first height is disposed between the central support part of the first frame 1000 and the central support part of the second frame 1010. Accordingly, the central part 510 of the support part may be supported so that an distance between the central support part of the first frame 1000 and the central support part of the second frame 1010 is maintained at an interval corresponding to the first height.

The side part 520 of the support part may be supported by the side support part of the first frame 1000 and the side support part of the second frame 1010. A pillar (second pillar) including a plurality of pillars having the second height is disposed between the side support part of the first frame 1000 and the side support part of the second frame 1010. Accordingly, the side part 520 of the support part may be supported so that an distance between the side support part of the first frame 1000 and the side support part of the second frame 1010 is maintained at an interval corresponding to the second height.

Meanwhile, the first frame 1000 and the second frame 1010 may have a grid shape formed by matrices having constant horizontal and vertical intervals. At each point where the matrices forming the grid shape cross, a pillar supporting the distance between the first frame 1000 and the second frame 1010 and/or a coupling groove into which the pillar is inserted and coupled may be formed. As a result, the pillars of the pillar 1020 are disposed at constant horizontal and vertical intervals to distribute the load applied to at least one of the first frame 1000 and the second frame 1010 to all of the first and second frames 1000 and 1010 connected by the plurality of pillars.

Meanwhile, the pillars may be formed to protrude from any one of the first frame 1000 and the second frame 1010 in a direction in which the other one is disposed. In this case, a coupling portion into which each pillar may be inserted and coupled, i.e., a coupling groove may be formed in the other frame where the pillars do not protrude.

As a result, a pillar which is formed to protrude from the any one frame is inserted into the coupling groove formed in the other frame. Accordingly, a pillar and a coupling groove corresponding to the pillar may be coupled to each other. By coupling the pillar and the coupling groove to each other, the first frame 1000 and the second frame 1010 may be coupled to each other in a form of maintaining an interval according to a height of pillars disposed between the first frame 1000 and the second frame 1010. A spaced formed at the distance between the first frame 1000 and the second frame 1010 according to the height of the pillars may be formed as an internal space for heat insulation in the heat insulator 500, for example, the vacuum space.

However, when pillars are formed to protrude in any one of the first frame 1000 or the second frame 1010 and/or coupling grooves into which the pillars are inserted and coupled are disposed in the other frame, the first frame 1000 and the second frame 1010 are configured so as not to be symmetrical to each other. As a result, the pillars may be strong against to external force in a specific direction, but vulnerable to external force in an opposite direction. In order to compensate for such a disadvantage, the pillars and the coupling grooves may be disposed alternately in each frame.

FIG. 12 illustrates an example in which pillars and/or coupling grooves are alternately disposed and disposed to cross each other in a first frame 1000 or a second frame 1010 forming a support part according to an embodiment of the present invention.

Referring to FIG. 12, FIG. 12 illustrates an example of the second frame 1010 that is not coupled to the first frame 1000. As illustrated in FIG. 12, in the case of the second frame 1010 according to an embodiment of the present invention, at each point where horizontal lines (rows) and vertical lines (columns) cross to generate a grid shape, pillars 1020 and coupling grooves 1030 may be alternately disposed along the rows or columns.

The pillars 1020 and the coupling grooves 1030 may be disposed to cross in the first frame 1000 and the second frame 1010. That is, when the pillars 1020 are formed in the first frame 1000, the coupling grooves 1030 may be formed in the second frame 1010, and when the pillars 1020 are formed in the second frame 1010, the coupling grooves 1030 may be formed in the first frame 1000.

As a result, at least one of the plurality of pillars may be formed to protrude from the first frame 1000, and some of the plurality of coupling grooves may be formed in the second frame 1010. Accordingly, the plurality of pillars formed to protrude from the first frame 1000 may be inserted into and/or coupled to the plurality of coupling grooves of the second frame 1010, which correspond thereto, respectively. As a result, the remaining pillars of the plurality of pillars may be formed to protrude from the second frame 1010, and some of the plurality of coupling grooves may be formed in the first frame 1000. Accordingly, the plurality of pillars formed to protrude from the second frame 1010 may be inserted into and/or coupled to the plurality of coupling grooves of the first frame 1000, which correspond thereto, respectively.

Meanwhile, the first frame 1000 may have a shape symmetrical to the second frame 1010 illustrated in FIG. 12 above. That is, in the first frame 1000, at each point where horizontal lines (rows) and vertical lines (columns) cross to generate the grid shape, pillars 1020 and coupling grooves 1030 may be alternately disposed along the rows or columns.

Here, each of the pillars which are formed to protrude from the first frame 1000 and the second frame 1010 may be disposed to correspond to each coupling groove formed in the other frame. Each of the coupling grooves which are disposed in the first frame 1000 and the second frame 1010 may be disposed to correspond to each pillar formed to protrude from the other frame.

As a result, the second frame 1010 illustrated in FIG. 12 and the first frame 1000 having a shape symmetrical to the second frame 1010 may be coupled to each other. An interval may be maintained according to a pillar disposed between the first frame 1000 and the second frame 1010 coupled to each other.

Meanwhile, as described above, the second frame 1010 may be formed to have a step 1101 corresponding to a step gradient of a plate forming a bottom surface of the heat insulator 500 so as to support the internal space of the side part 520 of the heat insulator 500. Similarly, the first frame 1000 may be formed to have a step corresponding to a step gradient of a plate forming a top surface of the heat insulator 500 so as to support the internal space of the side part 520 of the heat insulator 500.

In this case, as illustrated in FIG. 12 above, a pillar height (second height) of a portion (side support part 1120) of the second frame 1010 where the step gradient is formed may have a lower height than a pillar height (first height) of the other portion (central support part 1110) where the step gradient is not formed. Likewise, a pillar height (second height) of a portion (side support part 1120) of the first frame 1000 where the step gradient is formed may have a lower height than a pillar height (first height) of the other portion (central support part 1110) where the step gradient is not formed.

Accordingly, the distance between the first frame 1000 and the second frame 1010 in which the step gradients are formed may be formed narrower than an distance between the first frame 1000 and the second frame 1010 in which the step gradients are not formed.

Meanwhile, a reinforcing block 1210 may be further formed between at least one of grids of the first frame 1000 or the second frame 1010 to reinforce a strength of the frame. As illustrated in FIG. 12, the reinforcing block 1210 adds at least one of connections between rows or columns of one frame forming a grid structure to further reinforce a strength of a portion of the matrices.

Meanwhile, according to another embodiment of the present invention, the support part may be configured to further include at least one shielding plate for preventing cold air loss due to heat radiation. In this case, the at least one shielding plate may be disposed in parallel to the second frame 1010 or the first frame 1000 at a predetermined distance from the first frame 1000 or the second frame 1010.

FIG. 13 is an exemplary diagram illustrating a configuration example of a support part having a structure of a pillar including at least one shielding plate between a first frame 1000 and a second frame 1010 according to another embodiment of the present invention.

Referring to FIG. 13, FIG. 13 illustrates an example of a first frame 1000 and/or a second frame 1010 in which coupling grooves formed so that each pillar of the pillar may be inserted are alternately disposed at a predetermined distance. As illustrated in FIG. 13, between the first frame 1000 and the second frame 1010, two shielding plates 1301 and 1302 may be disposed in parallel to the second frame 1010 at a predetermined distance from the second frame 1010.

Meanwhile, as illustrated in FIG. 13, the shielding plate may be formed integrally with a coupling pin which may be coupled to the other shielding plate. A recess 1321 of which a portion is formed to be recessed to be coupled to the other coupling pin may be formed at one end of the coupling pin. A coupling protrusion 1322 which protrudes to be inserted into the recess 1321 may be formed at the other end of the coupling pin, i.e., the other end. The recess 1321 and the coupling protrusion 1322 may be formed on each end of the coupling pin around the shielding plate.

Accordingly, the coupling protrusion 1322 of each of a plurality of coupling pins formed on the first shielding plate 1301 is inserted into each of a plurality of coupling pin recesss 1321 formed on the second shielding plate 1302, so that the first shielding plate 1301 and the second shielding plate 1302 may be coupled to each other. In this case, as a length of the coupling protrusion 1322 inserted into the recess 1321 at least partially remains constant, the first shielding plate 1301 may be maintained at a constant interval and/or may be stacked on the second shielding plate 1302. That is, as illustrated in FIG. 13, a plurality of shielding plates may be stacked at a constant interval and/or layered through coupling pins formed on the shielding plates at constant horizontal and vertical intervals.

Meanwhile, the coupling pins coupled to each other may serve as pillars supporting an distance between the first frame 1000 and the second frame 1010 as illustrated in FIG. 13. For example, a coupling protrusion 1322 of a coupling pin located at the first or last position of the plurality of coupling pins coupled to each other, i.e., a coupling protrusion 1322 of a coupling pin positioned at a terminal may be formed to be inserted into and/or coupled to a coupling groove 1030 formed in the first frame 1000 or the second frame 1010. Accordingly, as illustrated in FIG. 13, a coupling pin coupling protrusion 1322 of a shielding plate (e.g., second shielding plate 1302) initially stacked on the second frame 1010 may be inserted into and coupled to a coupling groove 1320 of the second frame 1010. As a result, the second shielding plate 1302 may be coupled onto the second frame 1010.

Then, as illustrated in FIG. 13, each coupling pin coupling protrusion 1322 of the first shielding plate 1301 may be inserted into each coupling pin recess 1321 of the second shielding plate 1302. Accordingly, the first shielding plates 1301 stacked at a predetermined distance may be coupled onto the second shielding plate 1302. Each coupling pin recess of the first shielding plate 1301 reaches an inner surface of the first frame 1000 to support the first frame 1000. That is, as a plurality of shielding plates are stacked, the coupling pins formed on each shielding plate are coupled to each other, thereby serving as pillars that support the distance between the first frame 1000 and the second frame 1010.

Meanwhile, according to the above-described description, the first frame 1000 and the second frame 1010 according to the embodiment of the present invention have been described as examples in which the pillars and the coupling grooves are alternately disposed at a predetermined distance. As a result, the coupling grooves may be alternately disposed in the first frame 1000 and the second frame 1010 at a predetermined distance as illustrated in FIG. 13.

As the coupling grooves may be alternately disposed in the first frame 1000 and the second frame 1010 at predetermined distances as described above, the coupling pins of each shielding plate may also be disposed alternately as illustrated in FIG. 13. That is, in the shielding plate according to the embodiment of the present invention, in the case of a coupling pin corresponding to a position where a coupling groove is disposed in the second frame 1010, the coupling protrusion 1322 may be disposed in a first direction facing the second frame 1010. In the case of a coupling pin corresponding to a position where the coupling groove is disposed in the first frame 1000, the coupling protrusion 1322 may be disposed in a direction facing the first frame 1000, i.e., a second direction opposite to the first direction.

In this case, since the recess 1321 is formed in an opposite direction to the coupling pin where the coupling protrusion 1322 is formed, in the shielding plate according to the embodiment of the present invention, in the case of the coupling pin corresponding to the position where the coupling groove is disposed in the second frame 1010, the recess 1321 may be disposed in the second direction facing the first frame 1000. In the case of the coupling pin corresponding to the position where the coupling groove is disposed in the first frame 1000, it may be described that the recess 1321 is disposed in the direction facing the second frame 1010, i.e., the first direction.

Meanwhile, in the above description, it has been described that the plurality of shielding plates having the coupling pins formed thereon are stacked at predetermined distances, so that the recesss of the coupling pins reach the first frame 1000 or the second frame 1010, and the coupling pins coupled to each other support the distance between the first frame 1000 or the second frame 1010.

However, unlike this, a cross-shaped groove may be formed in the recess of each coupling pin so that the first frame 1000 or the second frame 1010 may be coupled to a cross point of a matrix forming a grid shape. In this case, when the recess of the coupling pin reaches the first frame 1000 or the second frame 1010, a matrix cross point of the first frame 1000 or the second frame 1010 may be inserted into the recess, and coupled and joined to the cross-shaped groove formed in the recess.

In the above description, a configuration has been described in which the shielding plate is formed integrally with coupling pins that may be coupled to the other shielding plate and the first frame 1000 or the second frame 1010, but it is obvious that the present invention is not limited thereto. That is, the coupling pins and the shielding plate may be separate components.

For example, the shielding plate may include a plurality of through-holes through which pillars of the pillar 1020 supporting the distance between the first frame 1000 or the second frame 1010 may pass. In this case, each pillar of the pillar 1020 protruding from the first frame 1000 or the second frame 1010 may pass through the through-holes formed in the shielding plate and be coupled and joined to a coupling groove formed in another frame. In this case, the shielding plate may include an interval maintaining block for maintaining a predetermined distance when the shielding plates are stacked. The interval maintaining block may allow intervals between respective shielding plates to be maintained constant when the plurality of shielding plates are stacked.

Meanwhile, in the above description, the configuration of the support part has been described in which the central support part 1110 supporting the central part 510 of the heat insulator 500 and the side support part 1120 extending from the central support part 1110 and/or formed to support the side part 520 of the heat insulator 500 are formed integrally. Unlike this, it is obvious that the central support part 1400 and the side support part 1410 may also have a structure to be separated into different parts. Hereinafter, a support part having the structure in which the central support part 1400 and the side support part 1410 are each separated into different parts will be referred to as a support part according to another embodiment of the present invention.

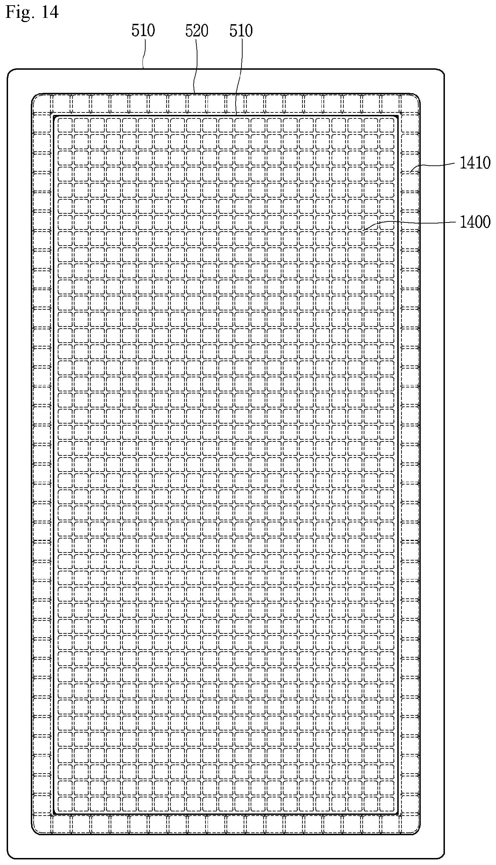

FIG. 14 is an exemplary diagram of a support part having a structure of a central support part and a side support part according to yet another embodiment of the present invention.

Referring to FIG. 14, an example of the heat insulator according to the embodiment of the present invention including the center portion 510, the side part 520, and/or the corner part 530 is illustrated. In this case, a central support part 1400 for supporting an distance between a first plate and a second plate forming a vacuum space of the heat insulator may be disposed inside the central part 510. A side support part 1410 for supporting the distance between the first plate and the second plate may be disposed inside the side part 520 to support the distance between the first plate and the second plate for maintaining the vacuum space formed inside the side part 520. The central support part 1400 and the side support part 1410 may be formed to be separable from each other.

Meanwhile, as described above, the first plate and the second plate are bent along an arch-shaped curved surface in directions approaching each other to form a step. As a result, a vacuum space having a thinner thickness than the vacuum space formed inside the central part 510 may be formed inside the side part 520. Accordingly, the distance between the first plate and the second plate inside the side part 520 may be smaller than the distance between the first plate and the second plate formed in the central part 510.

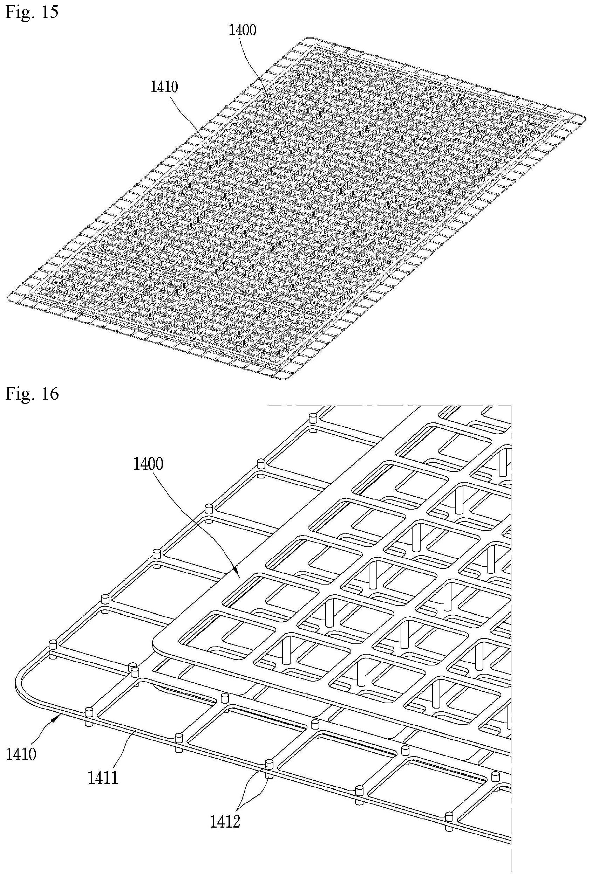

Accordingly, as illustrated in FIG. 15, which is a perspective view illustrating a support part having a structural form of FIG. 14 above, and FIG. 16, which is an enlarged view of a portion of the support part illustrated in FIG. 15, the central support part 1400 and the side support part 1410 may have different structures.

That is, as illustrated in FIG. 16, the central support part 1400 may include a first frame and a second frame, and/or may include pillars for maintaining an distance between the first frame and the second frame. That is, the inner sides of the first and second plates in the central part 510 may be primarily supported by the first and second frames having the grid structure. The central part 510 may be formed to maintain a predetermined distance by supporting the distance between the first frame and the second frame by pillars.

Meanwhile, unlike such a configuration, the side support part 1410 may be configured to include a central frame 1411 having the grid shape and/or protrusions which protrude in a vertical direction from the central frame 1411. In this case, since the central frame 1411 has a grid shape where the matrices cross, the protrusion portion 1412 may protrude at each point where the matrices cross.

Here, the protrusion portion 1412 may be a component portion that supports inner surfaces of the first plate and the second plate that form the side part 520 of the heat insulator by a step gradient. In this case, the protrusion portion 1412 is for supporting the distance between the first and second plates to form a vacuum space in the side part 520 of the heat insulator, and a vertical protruding length of the protrusion portion 1412 may be shorter than a length of the pillars supporting the distance between the first frame and the second frame of the central support part 1400.

The central frame 1411 of the side support part 1410 may be disposed between the first frame and the second frame of the central support part 1400, as illustrated in FIG. 16. Therefore, the central frame 1411 may not be in contact with an corner of the first frame and/or an corner of the second frame.

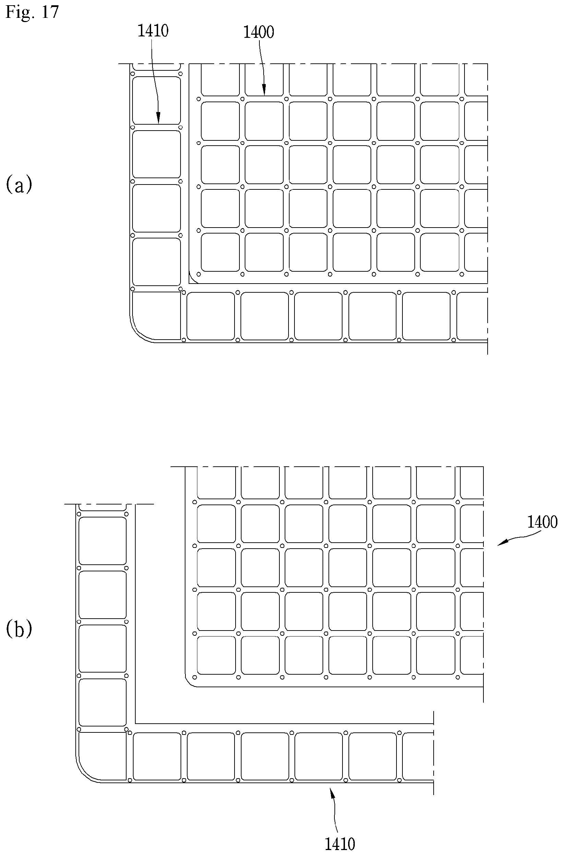

Meanwhile, the central support part 1400 and the side support part 1410 may be formed to be separated from each other as described above. That is, FIG. 17 illustrates such an example.

Referring to FIG 17A, when the central support part 1400 is disposed inside the heat insulator as illustrated in FIG. 17A, the central support part 1400 may be disposed inside the side support part 1410 according to the structure of the heat insulator 500 in which the side part 520 is disposed at the corner of the central part 510.

However, as described in FIG. 16 described above, the central frame 1411 of the side support part 1410 is positioned between the first frame and the second frame of the central support part 1400, and may not come into contact with the first frame and/or the second frame. That is, the side support part 1410 may not be supported by the central support part 1400, and may have a structure in which the side support part 1410 and the central support part 1400 are completely separated from each other, as illustrated in (b) of FIG. 17.

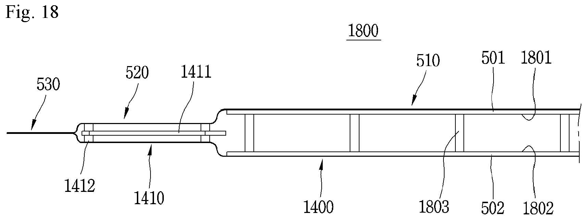

FIG. 18 is an exemplary diagram illustrating a heat insulator 1800 according to yet another embodiment of the present invention, in which an interior is supported by the central support part 1400 and the side support part 1410 formed in such a structure.

Referring to FIG. 18, the heat insulator 1800 may include a central part 510 in which a vacuum space is formed on an inner side, a side part 520 extending from the central part 510, and/or an corner part 530 in which no vacuum space is formed, according to first and/or second plates 501 and 502 having a step gradient.

In this case, a central support part 1400 including a first frame 1801, a second frame 1802, and/or pillars 1803 supporting an distance between the first frame 1801 and the second frame 1802 may be disposed on the inner side of the central part 510. An inner space of the central part 510 where the vacuum space is formed may be supported by the distance between the first frame 1801 and the second frame 1802 maintained according to heights of the pillars 1803.

Meanwhile, on an inner side of the side part 520, a central frame 1411 and/or a side support part 1410 including a plurality of protrusion portions 1412 protruding vertically from the central frame 1411 may be disposed. In this case, an distance between an extended region of the first plate 501 and an extended region of the second plate 502 forming an inner region of the side part 520 may be supported according to lengths of the protrusion portions 1412 protruding vertically from the central frame 1411.

Here, the side support part 1410 and the central support part 1400 may have a structure so as not to be connected to each other and to be separated from each other.. That is, as illustrated in FIG. 18, the central frame 1411 of the side support part 1410 is positioned between the first frame 1801 and the second frame 1802 of the central support part 1400, so that the respective frames may be disposed so as not to overlap with each other.

Meanwhile, as described above, the inner regions of the central part 510 and the side part 520 may have a pressure lower than an external pressure. As an example, the inner regions of the central part 510 and the side part 520 may be vacuum regions. Accordingly, the central part 510 and the side part 520 may receive external force due to a pressure difference from the outside.

Meanwhile, each support part may support the interior of the heat insulator 1800 so that a shape of the heat insulator 1800 does not collapse due to the external force caused by the pressure difference. The heat insulator 1800 according to the embodiment of the present invention has an envelope shape, so that the support part inside the heat insulator 1800 having the envelope shape may couple the first and second plates 501 and 502 that form a case of the heat insulator 1800 by the external force. That is, by the external force, the first and second plates 501 and 502 may be in close contact with the side support part 1410 and the central support part 1400, and the side support part 1410 and the central support part 1400 may be coupled to each other.

Accordingly, as illustrated in FIG. 18, even if the side support part 1410 is connected to the central support part 1400 and is not supported by the central support part 1400, the side support part 1410 may be coupled to the inner side of the side part 520 by the external force according to the pressure difference. As the side support part 1410 is coupled, the distance between the extended region of the first plate 501 and the extended region of the second plate 502 including the side part 520 may be supported by the protrusion portions 1412 protruding from the central frame 1411 of the side support part 1410.

Meanwhile, in the above description, it has been described as an example that the heat insulator has a first step 531 and/or a second step 532, but it is obvious that the present invention is not limited thereto. That is, of course, the heat insulator may have three or more step gradients.

Here, when the heat insulator has three or more step gradients, the first frame and/or the second frame of the support part may have a step gradient corresponding to a step of each of the three or more heat insulators. In this case, heights of pillars supporting respective regions of the first frame and the second frame may vary depending on the three or more step gradients. That is, as a thickness of the vacuum space increases according to the step gradient, the height of the pillar for maintaining the distance between the first frame and the second frame may increase to maintain the thickness of the vacuum space. That is, the heights of the pillars for maintaining the distance between the first frame and the second frame may vary depending on thicknesses of the different vacuum spaces of the heat insulator formed according to the step gradient.

Alternatively, as in yet another embodiment of the present invention described above, the support part may be divided into a plurality of parts according to the step gradient. In this case, each part may have a first frame, a second frame, and different pillars supporting between the first frame and the second frame. Here, since the thickness of the vacuum space for the heat insulation varies according to each step gradient for each part, heights of the pillars may vary for each part.

As an example, in FIGS. 15 to 18 described above, a configuration has been described in which the first plate and/or the second plate are directly supported by the support part protruding from the central frame. However, unlike this, it is obvious that the side support part may also be formed as a pillar including a first frame, a second frame, and pillars supporting between the first frame and the second frame, just like the configuration of the central support part.

Meanwhile, detailed embodiments have been described in describing the present invention and various modifications may be executed without departing from the scope of the present invention. Accordingly, the above detailed description should not be construed as restrictive in all terms and should be exemplarily considered. The scope of the present invention should be determined by rational construing of the appended claims and all modifications within an equivalent scope of the present invention are included in the scope of the present invention.

## Claims

1. A heat insulator comprising:
a first plate and a second plate disposed spaced apart from each other;
a central part where the first plate and the second plate are spaced apart from each other by a predetermined first distance; and
a side part extending from the central part, in which the first plate and the second plate are spaced apart from each other by a predetermined second distance.

2. The heat insulator of claim 15, wherein the support part includes
a first frame supporting the first plate in the sealed space or in the vicinity thereof;
a second frame supporting the second plate in the sealed space or in the vicinity thereof; and
a pillar including a plurality of pillars supporting the first frame and the second frame to maintain an distance between the first frame and the second frame.

3. The heat insulator of claim 2, wherein each of the first frame and the second frame comprises:
a plurality of frame steps corresponding to shapes of the first and second plates having the step gradient;
a central part support part supporting an interior of the central part of the heat insulator; and
a side support part formed to extend from the central part support part and support an interior of the side part of the heat insulator, and
wherein the support part includes
a first pillar including a plurality of pillars supporting between the central part support part of the first frame and the central part support part of the second frame so as to maintain the central part support part of the first frame and the central part support part of the second frame at a first frame distance; and
a second pillar including a plurality of pillars supporting between the side support part of the first frame and the side support part of the second frame so as to maintain the side support part of the first frame and the side support part of the second frame at a second frame distance smaller than the first frame distance.

4. The heat insulator of claim 2, wherein the support part includes
a first support part supporting one region of the first plate and one region of the second plate corresponding to the central part in the sealed space or in the vicinity thereof; and
a second support part supporting regions other than the regions of the first and second plates corresponding to the side part, and separated from the first support part.

5. The heat insulator of claim 4, wherein the first support part includes
a first frame supporting one region of the first plate corresponding to the central part;
a second frame supporting one region of the second plate corresponding to the central part; and
a plurality of pillars supporting an distance between the first frame and the second frame, and
wherein the second support part includes
a central frame extending from the central part, and disposed between extended regions of the first and second plates forming the side part; and
a plurality of protrusion portions formed to protrude in a vertical direction from the central frame, and support an distance between the extended regions of the first and second plates.

6. The heat insulator of claim 3 or 5, wherein at least one of the plurality of pillars are formed to protrude from the first frame and the rest of the plurality of pillars are formed to protrude from the second frame,
wherein the plurality of pillars protruding from the first frame are inserted and fixed into a plurality of coupling grooves formed in the second frame, respectively, and
wherein the plurality of pillars protruding from the second frame are inserted and fixed into a plurality of coupling grooves formed in the first frame, respectively.

7. The heat insulator of claim 6, wherein the pillars and the coupling grooves are formed in the first frame and the second frame alternately at a predetermined distance, and formed to cross in the first frame and the second frame.

8. The heat insulator of claim 2, further comprising at least one shielding plate disposed between the first frame and the second frame, and preventing heat radiation in a direction parallel to the first frame and the second frame.

9. The heat insulator of claim 2, wherein a plurality of shielding plates disposed in parallel to the first frame or the second frame are stacked at a predetermined distance between the first frame and the second frame, and
wherein interval maintaining blocks for maintaining the predetermined distance are inserted between the plurality of shielding plates.

10. The heat insulator of claim 9, wherein the shielding plate includes a plurality of coupling pins that is configured to be coupled to the other shielding plate,
wherein a recess into which a portion is recessed is formed at one end of the coupling pin to be coupled to a coupling pin of the other shielding plate,
wherein a coupling protrusion formed to protrude by a predetermined length is formed at the other end of the coupling pin so that a portion is enabled to be inserted into a recess formed at a coupling pin of another shielding plate,
wherein a recess and a coupling protrusion of each of the plurality of coupling pins formed in each shielding plate are coupled to a coupling protrusion and a recess of the other shielding plate, respectively, so that a plurality of shielding plates are stacked at a predetermined distance, and
wherein a coupling protrusion of a coupling pin positioned at a terminal among the plurality of coupling pins coupled to each other is coupled to the coupling groove formed in the first frame or the second frame to couple and fix the plurality of stacked shielding plates to the support part.

11. The heat insulator of claim 15, wherein the first plate and the second plate form an arch-shaped curved surface in directions approaching each other, and are gently bent to form the plurality of steps.

12. The heat insulator of claim 15, wherein the corner part is joined to an corner part of the other heat insulator and the joined corner part is bent according to a structural shape of a target device, so that a plurality of different heat insulators form the structural shape of the target device.

13. The heat insulator of claim 12, further comprising:
a first insulating material covering an outer surface of the bent corner and an outer surface of the side part; and
an assembly block disposed along a structural exterior shape of the target device, and coupled to a coupler passing through the first insulating material and the bent corner part to fix the first insulating material and the bent corner part.

14. The heat insulator of claim 13, further comprising:
a second insulating material covering an inner surface of the bent corner part and an outer surface of the side part,
wherein the coupler passes through the first insulating material and the bent corner part, and the second insulating material, and is coupled to the assembly block to fix the first insulating material and the bent corner part, and the second insulating material.

15. The heat insulator of claim 1, further comprising:
an corner part extending from the side part, in which the first plate and the second plate are integrally joined into a single plate; and
a support part supporting the first plate and the second plate to maintain the first distance and the second distance in the central part and the side part, respectively,
wherein the heat insulator comprises step gradients formed in directions gradually approaching each other through a plurality of steps, and
wherein the second distance is shorter than the first distance.
